# EUROPÄISCHE PATENTSCHRIFT

(11) **EP 0 763 675 B1**
(45) Veröffentlichungstag und Bekanntmachung des Hinweises auf die Patenterteilung: **14.07.2004**
(21) Anmeldenummer: 96114346.8
(22) Anmeldetag: 07.09.1996
(51) Int. Cl.: F16H 57/02, F16H 37/02

(54) **Gehäusegestaltung eines Automatgetriebes**
Gearbox casing for an automatic transmission
Carter de boîte de vitesses automatique

(30) Priorität: 14.09.1995 DE 19533993
(43) Veröffentlichungstag der Anmeldung: 19.03.1997
(73) Patentinhaber: ZF-Batavia, L.L.C., Plymouth, Michigan 48170-2456 (US)
(72) Erfinder: Kauffeld, Rudolf, 88138 Sigmarszell (DE); Mozer, Herbert, 88048 Friedrichshafen (DE)
(74) Vertreter: Zietlow, Karl-Peter

(56) Entgegenhaltungen:
- EP-A- 0 319 044
- EP-A- 0 373 490
- GB-A- 2 092 246
- GB-A- 2 093 133
- US-A- 4 906 221

## Beschreibung

Die Erfindung betrifft ein Automatgetriebe mit den Merkmalen nach dem Oberbegriff von Anspruch 1. Ein derartiges Getriebe ist aus den Figuren 8-10 der EP-A-373490 bekannt.

Automatgetriebe im weiteren Sinne sind Kennungswandler, deren momentane Übersetzung sich selbsttätig in Abhängigkeit von momentanen oder zu erwartenden Betriebszuständen, wie zum Beispiel Teillast, Schub, und Umgebungsparametern, wie zum Beispiel Temperatur, Luftdruck, Luftfeuchtigkeit, stufenweise oder stufenlos verändert. Zu ihnen gehören solche Kennungswandler, die auf einem elektrischen, pneumatischen, hydrodynamischen, hydrostatischen Prinzip oder auf einem aus diesen Prinzipien gemischten Prinzip beruhen.

Die Automatisierung bezieht sich auf die verschiedensten Funktionen, wie zum Beispiel das Anfahren, die Übersetzungsauswahl, die Art der Übersetzungsveränderung bei verschiedenen Betriebssituationen, wobei unter Art der Übersetzungsveränderung zum Beispiel das Schalten von einzelnen Stufen nacheinander, das Überspringen von Schaltstufen und die Geschwindigkeit der Verstellung verstanden werden kann.

Der Wunsch nach Komfort, Sicherheit und vertretbarem Bauaufwand bestimmt der Automatisierungsgrad, d. h. wieviele Funktionen selbsttätig ablaufen.

In der Regel kann der Fahrer manuell in den automatischen Ablauf eingreifen oder ihn für einzelne Funktionen begrenzen.

Automatgetriebe im engeren Sinne, wie sie heute vor allem im Fahrzeugbau verwendet werden, haben in der Regel folgenden Aufbau:

Auf der Antriebsseite des Getriebes befindet sich eine Anfahreinheit in Form einer regelbaren Kupplung, zum Beispiel einer nassen oder trockenen Reibungskupplung, einer hydrodynamischen Kupplung oder einem hydrodynamischen Wandler.

Zu einem hydrodynamischen Wandler wird häufig eine Überbrückungskupplung parallel zum Pumpen- und Turbinenteil geschaltet, welche durch direkte Kraftübertragung den Wirkungsgrad steigert und durch definierten Schlupf bei kritischen Dehzahlen die Schwingung dämpft.

Die Anfahreinheit treibt ein mechanisches, stufenloses oder gestuftes Wechselgetriebe an, das eine Vorwärts-/Rückwärtsfahreinheit, eine Haupt-, Bereichs-, Splitgruppe und/oder einen Variator enthalten kann. Zahnradgetriebegruppen werden, je nach Anforderungen an Laufruhe, Platzverhältnisse und Übertragungsmöglichkeiten, in Vorgelege- oder Planetenbauweise mit Gerad- oder Schrägverzahnung ausgelegt.

Das Ausgangselement des mechanischen Getriebes, eine Welle oder ein Zahnrad, treibt direkt oder indirekt über Zwischenwellen bzw. eine Zwischenstufe mit einer konstanten Übersetzung auf ein Differentialgetriebe, das als separates Getriebe gestaltet sein kann oder ein integrierter Bestandteil des Automatgetriebes ist. Grundsätzlich eignet sich das Getriebe für Längs- und Quereinbau im Fahrzeug.

Zur Verstellung der Übersetzung im mechanischen Getriebe sind hydrostatische, pneumatische und/oder elektrische Stellglieder vorgesehen. Eine Hydraulikpumpe, die nach dem Verdrängerprinzip arbeitet, liefert Drucköl für die Anfahreinheit, insbesondere die hydrodynamische Einheit, für die hydrostatischen Stellelemente des mechanischen Getriebes und für die Schmierung und Kühlung des Systems. Je nach erforderlichem Druck und Fördervolumen kommen Zahnradpumpen, Schraubenpumpen, Flügelzellenpumpen und Kolbenpumpen, letztere meistens in radialer Bauart, in Frage. In der Praxis haben sich Zahnradpumpen und Radialkolbenpumpen für diesen Zweck durchgesetzt, wobei die Zahnradpumpe wegen ihres geringen Bauaufwandes und die Radialkolbenpumpe wegen des höheren Druckniveaus und der besseren Regelbarkeit Vorteile bietet.

Die Hydraulikpumpe kann an einer beliebigen Stelle des Getriebes an einer ständig von der Antriebseinheit angetriebenen Haupt- oder Nebenwelle angeordnet sein. Um das Drucköl über kurze Leitungen bzw. Kanäle den Verbrauchern zuzuführen, wird die Pumpe in der Regel an einer zentralen Stelle, nämlich zwischen der Anfahreinheit und dem Wechselgetriebe, vorgesehen. Geeignet hierfür ist eine Lagerwand zwischen der Anfahreinheit und dem Wechselgetriebe, in deren Bereich das Getriebegehäuse quer zur Antriebswelle häufig geteilt ist.

Die Lagerwand kann zwischen dem Gehäuseteil des Wechselgetriebes und einer Kupplungs- oder Wandlerglocke, die die Anfahreinheit umschließt und mit der das Getriebe an eine Antriebseinheit angeflanscht wird, als separates Bauteil befestigt oder ein integrierter Bestandteil der Wandlerglocke sein, die dann den stirnseitigen Abschluß des Wechselgetriebes bildet.

Zur Aufnahme einer innenachsigen Zahnradpumpe oder Radialkolbenpumpe besitzt die Lagerwand eine zylindrische Aufnahmebohrung, in die der Pumpenkörper und die übrigen Pumpenelemente eingesetzt werden. Aufbau und Funktion der Radialkolbenpumpe sind in der Patentanmeldung "Automatgetriebe mit Hydraulikpumpe (DE-A 195 26 268.9)" näher ausgeführt.

Da das Getriebegehäuse quer zu den Antriebswellen geteilt ist, entstehen formstabile, leicht zu bearbeitende Gehäuseteile, in denen Lagerungen einer Primärwelle, Lagerungen einer Sekundärwelle, Lagerungen einer Seitenwelle und Lagerungen von Wellen des Differentials aufgenommen sind. Primärwelle, Sekundärwelle, Seitenwelle und Differentialwellen können in den Außenwandungen des Getriebes sicher gelagert werden, indem die auftretenden Kräfte gut aufgenommen werden. Die Einbauöffnungen der Wellen sind in der Regel mit Deckeln nach außen verschlossen.

Aus der Automobiltechnischen Zeitschrift 96 (1994) 6, Seite 380, Bild 3, ist ein stufenloses Automatgetriebe bekannt, bestehend aus einem hydrodynamischen Wandler als Anfahreinheit, einem Planetenwendegetriebe als Vorwärts-/Rückwärtsfahreinheit, einer Radialkolbenpumpe, einem Variator, einer Zwischenwelle und einem Differential. Der Variator wiederum besteht aus zwei Kegelscheibenpaaren und einem Umschlingungsorgan. Jedes Kegelscheibenpaar besteht aus einer in axialer Richtung feststehenden ersten Kegelscheibe und einer in axialer Richtung verschiebbaren zweiten Kegelscheibe. Zwischen diesen Kegelscheibenpaaren läuft das Umschlingungsorgan, zum Beispiel ein Schubgliederband, eine Zugkette oder ein Riemen. Über die Verstellung der zweiten Kegelscheibe ändert sich der Laufradius des Umschlingungsorgans und somit die Übersetzung des stufenlosen Automatgetriebes.

Stufenlose Automatgetriebe erfordern ein besonders hohes Druckniveau, um die Kegelscheiben des Variators in allen Betriebspunkten mit der gewünschten Geschwindigkeit verstellen zu können und außerdem mit einem genügenden Basisanpreßdruck weitgehend verschleißfrei das Drehmomentes zu übertragen. Für diesen Anwendungsfall fällt die grundsätzliche Zielsetzung, ein Getriebegehäuse mit möglichst wenigen Öffnungen nach außen zu konstruieren, besonders ins Gewicht.

Das dem Wandler abgewandte Gehäuseteil ist im Bereich der Primär- und der Sekundärwelle schwierig zu gestalten, da das Ziel, die beiden Wellen einfach zu montieren, mit der Forderung nach einer hohen Dichtheit und Festigkeit in Einklang gebracht werden muß. Erschwerend kommt hinzu, daß hohe Drücke der Primär- und der Sekundärdruckölzuführung, die bis zu 50 bar erreichen können, bewältigt werden maussen.

Der Erfindung liegt daher die Aufgabe zugrunde, ein Gehäuseteil so zu gestalten, daß es das Getriebe gegenüber hohen Drücken nach außen sicher abdichtet, eine hohe Festigkeit aufweist und eine leichte Montage ermöglicht.

Sie wird gemäß der Erfindung durch die Merkmale des Kennzeichenteils des Anspruches 1 gelöst.

Da die Lagerstellen der Primär- und die Sekundärwelle auf der dem Wandler abgewandten Seite durch ein einteiliges Gehäuseteil nach außen hermetisch abgeschlossen sind und damit ein Deckel für die Primär- und ein Deckel für die Sekundärwelle vermieden werden, kann man durch Außenöffnungen entstehende Leckagen vermeiden, benötigte Einzelbauteile reduzieren, die erforderliche Montagezeit kürzen, die Festigkeit verbessern und den erforderliche Bauraum, infolge Einsparung von Flansch, Schrauben und Stellen mit doppelter Wandung, reduzieren.

Von großer Bedeutung ist dabei, daß die Lagersitze für die Primär- und für die Sekundärwelle aus einem Bauteil bestehen. Dadurch können die Lagersitze der Primär- und der Sekundärwelle in einer Einspannung und in einem Bauteil bearbeitet werden, infolgedessen werden die radialen Abstände der Wellen sowie die Lage der axialen Fixierung bei geringem Aufwand bei hoher Präzision hergestellt.

In Sonderfällen, wenn man auf die Sekundär- oder auf die Primärwelle häufig zugreifen muß, kann für diese Welle ein Deckel vorgesehen werden.

Das Öl wird ganz oder teilweise durch Kanäle in den Gehäusewandungen zu der Primär- und Sekundärwelle geführt, wodurch ebenfalls die Dichtheit des Getriebegehäuses verbessert wird, indem erforderliche Dichtungen entfallen und kritische Bereiche vermieden werden. Die Ölkanäle können direkt in die Gehäusewand eingegossen oder durch ein teilweise oder ganz eingeschlossenes Rohr (z. B. durch Eingießen, Kleben, Schmieden, Pressen usw.) in der Wand gebildet werden.

Werden die Deckel der Primär- und der Sekundärwelle durch das beschriebene einteilige Gehäuseteil vermieden, so müssen die Lager der Primär- und der Sekundärwelle durch eine zusätzliche konstruktive Ausgestaltung nach innen fixiert werden.

Nach einer weiteren Ausführungsform werden die Haltebleche für die Lager der Primär- und der Sekundärwelle von der inneren Seite des Gehäuseteils in Sacklöchern verschraubt. Dadurch lassen sich die Lager von innen montieren und fixieren wodurch ein nach außen hin geschlossenes Gehäuseteil ohne Öffnungen sichergestellt ist.

Ferner können die Haltebleche nach Art eines Bajonettverschluß befestigt sein. In der Zeichnung ist ein Ausführungsbeispiel der Erfindung dargestellt. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu sinnvollen Kombinationen zusammenfassen.
Es zeigen:
- Fig. 1: ein Systemschaubild über den Aufbau eines stufenlosen Automatgetriebes;

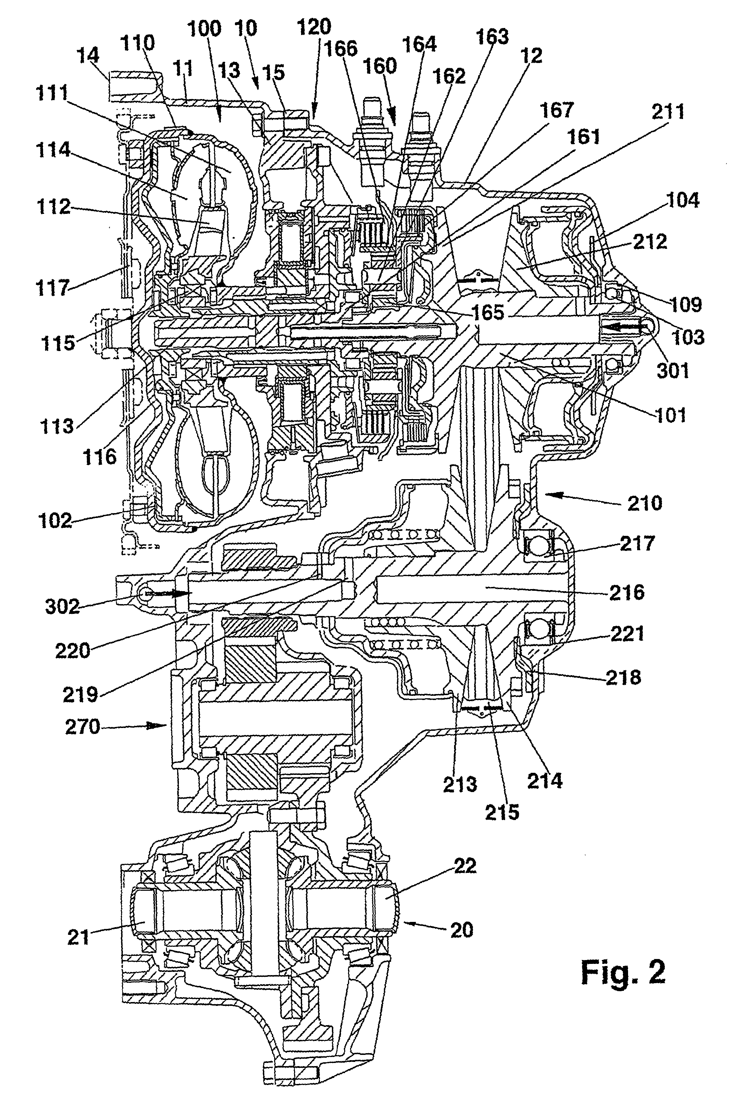

- Fig. 2: einen ersten Querschnitt durch ein stufenloses Automatgetriebe und
- Fig. 3: Ausschnitt aus einem zweiten Querschnitt durch das stufenlose Automatgetriebe.

### Fig. 1:

In einem Gehäuse 10 des Automatgetriebes sind eine Anfahreinheit 100, eine Radialkolbenpumpe 120, eine Vorwärts-/Rückwärtsfahreinheit 160, ein Variator 210, eine konstante Zwischenübersetzung 270, ein Differential 20 und ein hydraulisches Steuergerät untergebracht. Das hydraulische Steuergerät 3 arbeitet mit einem elektronischen Steuergerät 4 zusammen. Das Automatgetriebe ist für einen Einbau quer zur Fahrtrichtung eines Fahrzeuges vorgesehen.

### Fig. 2:

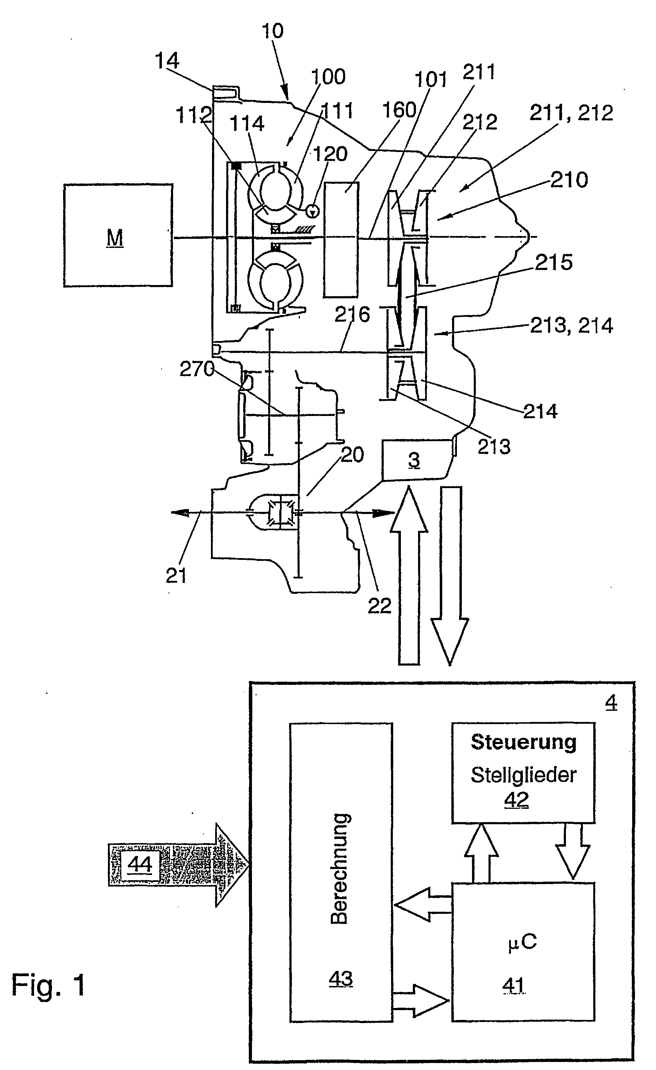

Das Gehäuse 10 ist quer zu den Drehachsen geteilt. Mit einem Anschlußflansch 14 kann der antriebsseitige Teil des Gehäuses 10 an den symbolisch dargestellten Antriebsmotor M (Fig. 1) angeflanscht werden. Der Anschlußflansch 14 gehört zu einem als Wandlerglocke 11 bezeichneten Gehäuseteil, das die Anfahreinheit einschließt und zu einer Trennfuge 15 des Gehäuseteils 12 eine motorseitige Lagerwand 13 bildet.

In den Stirnwänden der beiden Gehäuseteile 11, 12 sind Primär- 101, Sekundär- 216, Seitenwelle 270 und Wellen des Differentials 20 gelagert. Das dem Wandler abgewandte Gehäuseteil 12 umschließt in ungeteilter Form und ohne Öffnungen nach außen die Primär- 101 und die Sekundärwelle 216 und in ungeteilter Form mit Öffnungen nach außen das Differential 20. Die Lager 103, 217 der Primär- 101 und der Sekundärwelle 216 werden durch Haltebleche 104, 218, die von innen mit dem Gehäuseteil 12 in Sacklöchern verschraubt sind, fixiert.

Als Anfahreinheit 100 dient eine hydrodynamische Einheit in Form eines Wandlers 110 mit einem Pumpenrad 111, das über ein Wandlergehäuse 116 und eine Membran 117 vom Antriebsmotor angetrieben wird. Die Membran 117 gleicht einen kleinen Achs- und/oder Winkelversatz zwischen dem Antriebsmotor und dem Automatgetriebe aus.

Der Wandler hat ferner ein Leitrad 112, das sich über einen Freilauf 115 und eine Leitradwelle am Gehäuseteil 12 abstützt. Das Pumpenrad 111 und das Leitrad 112 arbeiten mit einem Turbinenrad 114 in einem hydrodynamischen Kreislauf zusammen. Das Turbinenrad 114 treibt über eine Primärwelle 101 die Vorwärts-/Rückwärtsfahreinheit 160 an. Um den Wirkungsgrad des Wandlers 110 zu verbessern und Schwingungen im Antriebsstrang zu reduzieren, ist zwischen dem Pumpenrad 111 bzw. dem damit verbundenen Wandlergehäuse und dem Turbinenrad 114 eine Überbrückungskupplung 102 vorgesehen, die im Bedarfsfall schlupfgesteuert wird.

### Fig. 3:

Ein Ölkanal 301, der vollständig innerhalb des Gehäuseteils 12 liegt, führt das Öl zur Primärwelle 101 indem er ausgehend vom Steuerungskasten 300, über die Wandung des Gehäuseteils 12, in die dem Wandler abgewandten Stirnseite der Primärwelle 101 mündet. Durch eine Durchlaßöffnung 105 in der Welle und einer zweiten Durchlaßöffnung 106 in einem Kolben 107 des Tandemzylinder 108 wird das Öl in die entsprechenden Druckräume gebracht und führt damit zur gewünschten Stellung der dem Gehäuseteil 12 zugewandten Kegelscheibe 212.

### Fig. 2:

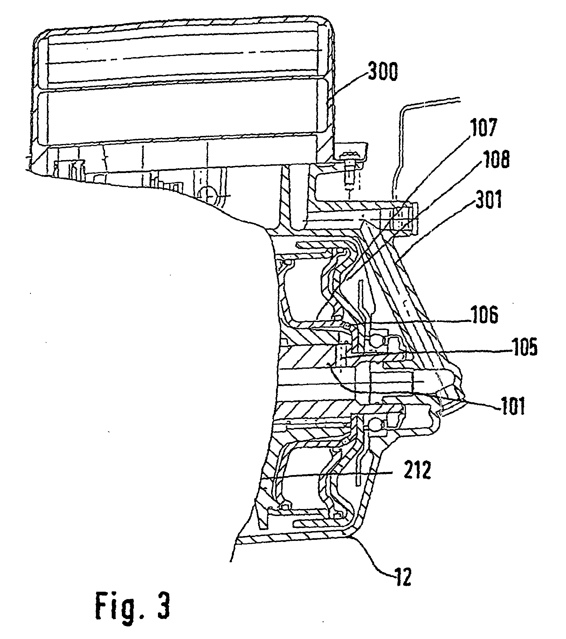

Ferner wird das Öl für die Sekundärwelle 216 in der Längsachse des Getriebes, in nicht dargestellten Kanälen, ausgehend vom Steuerungskasten 300 (siehe Fig. 3), der dem Wandler zugewandten Stirnseite der Sekundärwelle über den Ölraum 302 zugeführt. Das Drucköl wird ebenfalls durch Durchlaßöffnungen 219, 220 in der Sekundärwelle 217 in die entsprechenden Druckräume befördert, um hier die Stellung der inneren Kegelscheibe 213 und den Anpreßdruckes auf das Schubgliederband 215 zu steuern.

Die Vorwärts-/Rückwärtsfahreinheit 160 ist ein Planetensatz mit einem Planetenträger 161, der von der Primärwelle 101 angetrieben wird. In ihm sind auf Planetenbolzen 162 Planetenräder 163 gelagert, die einerseits mit einem Hohlrad 164 und andererseits mit einem Sonnenrad 165 kämmen. Während das Hohlrad 164 über eine Bremse 166 am Gehäuseteil 12 abgestützt werden kann und somit einen Rückwärtsgang bildet, wird zum Vorwärtsfahren der Planetensteg über eine Kupplung 167 mit dem ersten Kegelscheibenpaar 211, 212 des Variators 210 gekuppelt.

Der Variator 210 ist ein Umschlingungsgetriebe mit einem ersten Kegelscheibenpaar 211, 212 und einem zweiten Kegelscheibenpaar 213, 214, die über ein Umschlingungsorgan, wie zum Beispiel Schubgliederband 215, zusammenwirken.

Jedes Kegelscheibenpaar besteht aus einer in axialer Richtung feststehenden Kegelscheibe 211, 214 und einer in axialer Richtung verschiebbaren Kegelscheibe 212, 213. Die Übersetzung des Getriebes wird verändert, indem die Position der verschiebbaren zweiten Kegelscheibe geändert wird. Dadurch ändert sich der Laufradius des Umschlingungsorgans 215 und somit die Übersetzung. Der Variator 210 ist mit einer Sekundärwelle 216 verbunden. Eine Seitenwelle 270 ist mit der Sekundärwelle 216 über ein Zahnradpaar verbunden. Die Seitenwelle 270 dient der Drehrichtungsumkehr und einer Drehzahlanpassung. Die Seitenwelle 270 ist über ein Zahnradpaar mit dem Differential 20 verbunden. Ausgangsgröße des Differentials 20 sind die beiden Achshalbwellen 21 und 22, die auf die Antriebsräder des Fahrzeugs führen.

### Fig. 1:

Das elektronische Steuergerät 4 steuert über nicht dargestellte elektromagnetische Stellglieder das CVT. Vom elektronischen Steuergerät 4 sind als Funktionsblöcke dargestellt der Micro-Controller 41, ein Funktionsblock Berechnung 43 und ein Funktionsblock Steuerung Stellglieder 42. Am elektronischen Steuergerät 4 sind Eingangsgrößen 44 angeschlossen. Eingangsgrößen 44 sind zum Beispiel das Signal einer Drosselklappe, das Signal der Drehzahl der Antriebseinheit, das Signal der Fahrzeuggeschwindigkeit und die Drehzahlsignale der Kegelscheibenpaare. Der Micro-Controller 41 berechnet mittels des Funktionsblocks 43 aus den Eingangsgrößen 44 die Funktionsparameter für das CVT. Diese werden mittels des Funktionsblocks Steuerung Stellglieder 42 und über die nicht dargestellten elektromagnetischen Stellglieder, welche sich im hydraulischen Steuergerät 3 des CVT befinden, eingestellt. Funktionsparameter des CVT sind zum Beispiel die Übersetzung und der Anpreßdruck der Kegelscheiben zum Schubgliederband 215.

### Bezugszeichen

### 1er Nummernkreis (1/10 - 19/100 - 199):

### Gehäuse

- 10: gesamtes Gehäuse
- 11: antriebsseitiger Teil des Gehäuses (Wandlergloke)
- 12: Gehäuseteil auf der Seite des Variators
- 13: Lagerwand
- 14: Anschlußflansch
- 15: Trennfuge

### Anfahreinheit

- 100: Anfahreinheit gesamt
- 110: nähere Bezeichnung (hydrodynamischer Wandler)
- 111: Pumpenrad
- 112: Leitrad
- 113: Leitradwelle
- 114: Turbinenrad
- 115: Freilauf
- 116: Wandlergehäuse
- 117: Membran
- 101: Primärwelle
- 102: Überbrückungskupplung
- 103: Lager Primärwelle
- 104: Halteblech der Primärlagerung
- 105: Durchlaßöffnung in der Primärwelle
- 106: Durchlaßöffnung im 1 Kolben des Tandemzylinders
- 107: Kolben des Tandemzylinder
- 108: Tandemzylinder
- 109: Lagersitz der Primärwelle

### Hydraulikpumpe

- 120: Radialkolbenpumpe gesamt

### Vorwärts-/Rückwärtsfahreinheit

- 160: Vorwärts/Rückwärts gesamt
- 161: Planetenträger
- 162: Planetenbolzen
- 163: Planetenräder
- 164: Hohlrad
- 165: Sonnenrad
- 166: Bremse
- 167: Kupplung

### 2er Nummernkreis (2/20 - 29/200 - 299):

### Differential

- 20: gesamtes Differential
- 21: Achshalbwellen
- 22: Achshalbwellen
- 2: Eingangszahnrad

### Variator

- 210: gesamter Variator
- 211, 212: erstes Kegelscheibenpaar
- 213, 214: zweites Kegelscheibenpaar
- 215: Umschlingungsorgan (Schubgliederband)
- 216: Sekundärwelle
- 217: Lager der Sekundärwelle
- 218: Halteblech der Sekundärwellenlagerung
- 219: Erste Durchlaßöffnung in der Sekundärwelle
- 220: Zweite Durchlaßöffnung in der Sekundärwelle
- 221: Lagersitz der Sekundärwelle

### Seitenwelle

- 270: gesamte Seitenwelle

### 3er Nummernkreis (3/30 - 39/300 - 399):

### Hydraulisches Steuergerät

- 3: gesamtes Gerät
- 300: Steuerungskasten
- 301: Ölzuführung der Primärwelle
- 302: Ölraum

### 4er Nummernkreis (4/40 - 49/400 - 499):

### Elektronisches Steuergerät

- 4: gesamtes elektronisches Steuergerät
- 41: Micro-Controller
- 42: Funktionsblock Steuerung Stellglieder
- 43: Funktionsblock Berechnung
- 44: Eingangsgrößen

- M: Antriebseinheit

## Patentansprüche

1. Stufenloses Automatgetriebe mit in Stirnwänden gelagerter Primär- (101) und Sekundärwelle (216) eines Variators (210) zur stufenlosen Verstellung der Getriebeübersetzung und mit einem quer zu den Wellen (101, 216) des Variators (210) geteilten Gehäuse (10), wobei
a) Primär- (101) und/oder Sekundärwelle (216) durch ein einteiliges Gehäuseteil (12), welches auf der einer Antriebseinheit (100, 110) abgewandten Seite des Getriebes angeordnet ist, nach außen hin hermetisch abgeschlossen sind;
b) das Gehäuseteil (12) Lagersitze (109, 221) für auf der Antriebseinheit (100, 110) abgewandten Getriebeseite angeordnete Lagerungen (103, 217) von Primär- (101) und Sekundärwelle (216) aufweist; **gekennzeichnet durch** folgende Merkmale:
c) die im Gehäuseteil (12) angeordneten Lagerungen (103, 217) von Primär- (101) und Sekundärwelle (216) werden an dem Inneren des Gehäuseteils (12) mit Halteblechen (104, 218) befestigt und axial fixiert;
d) die Befestigung der Haltebleche (104, 218) greift nicht **durch** die Wand des Gehäuseteils (12) hindurch;
e) eine Ölzuführung (301) zur Druckbeaufschlagung eines auf der Primärwelle (101) abgewandten ersten Kegelscheibenpaares (211, 212) ist ganz oder teilweise **durch** eine Wand des Gehäuseteils (12) eingeschlossen.

2. Stufenloses Automatgetriebe nach Anspruch 1, **dadurch gekennzeichnet, daß** eine Ölzuführung zur Druckbeaufschlagung eines auf der Sekundärwelle (216) angeordneten zweiten Kegelscheibenpaares (213, 214) durch eine Wand des Gehäuseteils (12) ganz oder teilweise geschlossen ist.

## Claims

1. Continuously variable automatic transmission with front-wall-mounted primary (101) and secondary shaft (216) of a variator (210) for infinitely variable adjustment of the transmission ratio, and with a housing (10) split transversally in relation to the shafts (101, 216) of the variator (210), with
a) primary (101) and/or secondary shaft (216) being hermetically sealed from the outside by means of a single-piece housing element (12) arranged on the side of the transmission not facing the drive unit (100, 110);
b) the housing element (12) featuring bearing seats (109, 221) for bearings (103, 217) of primary (101) and secondary shaft (216), which are arranged on the side of the transmission not facing the drive unit (100, 110); **characterized by** the following features:
c) the bearings (103, 217) of primary (101) and secondary shaft (216) arranged in the housing element (12) are mounted and axially fixed to the inside of the housing element (12) by means of retaining plates (104, 218);
d) the mounting of the retaining plates (104, 218) does not go through the wall of the housing element (12);
e) an oil feed (301) for pressurizing a first V-pulley (211,212) arranged on the primary shaft (101) is wholly or partly enclosed by a wall of the housing element (12).

2. Continuously variable automatic transmission according to claim 1, **characterized in that** an oil feed for pressurizing a second V-pulley (213, 214) arranged on the secondary shaft (216) is wholly or partly enclosed by a wall of the housing element (12).

## Revendications

1. Transmission automatique à variation continue dotée d'un arbre primaire (101) et d'un arbre secondaire (216) d'un variateur (210) pour le réglage continu du rapport de démultiplication de la transmission, ceux-ci étant logés dans les parois frontales, et dotée d'un carter (10) divisé dans le sens transversal par rapport aux arbres (101, 216) du variateur (210), sachant que
a) l'arbre primaire (101) et/ou l'arbre secondaire (216) sont hermétiquement fermés à l'extérieur par une partie de carter (12) en une pièce étant disposée sur une face de la transmission opposée à une unité d'entraînement (110, 110) ;
b) la partie de carter (12) comporte des logements de paliers (109, 221) pour des sièges de roulements (103, 217) de l'arbre primaire (101) et de l'arbre secondaire (216) disposés sur la face de la transmission opposée à l'unité d'entraînement (100, 110), **caractérisée par** les éléments suivants :
c) les sièges de roulements (103, 217) de l'arbre primaire (101) et de l'arbre secondaire (216) disposés dans la partie de carter (12) sont fixés à l'intérieur de la partie de carter (12) au moyen de tôles d'arrêt (104, 218) et bloqués axialement ;
d) la fixation des tôles d'arrêt (104, 218) ne passe pas par la paroi de la partie de carter (12) ;
e) une conduite d'amenée d'huile (301) pour la pressurisation d'un premier paire de disques coniques (211, 212) opposé sur l'arbre primaire (101) est renfermée complètement ou partiellement par une paroi de la partie de carter (12).

2. Transmission automatique à variation continue selon la revendication 1, **caractérisée en ce que** une conduite d'amenée d'huile pour la pressurisation d'un deuxième paire de disques coniques (213, 214) disposé sur l'arbre secondaire (216) est renfermée complètement ou partiellement par une paroi de la partie de carter (12).
